# EUROPEAN PATENT APPLICATION

(11) **EP 2 810 723 A2**
(43) Date of publication of application: **10.12.2014**
(21) Application number: 13711060.7
(22) Date of filing: 01.02.2013
(51) Int. Cl.: B21D 24/02, F16F 9/02

(54) **COMPRESSION CYLINDER FOR PRESSES**

(30) Priority: 01.02.2012 ES 201230147
(60) Divisional application: 14185139.4
(71) Applicant: Nitrogas, S.A.U., 01510 Miñano (ES)
(72) Inventor: DEL TESO DÍEZ, Luis, E-01169 Aramaio (Araba) (ES); ANGULO ARANDIA, Victor Manuel, E-01008 Vitoria-Gasteiz (ES)
(74) Representative: Igartua, Ismael
(86) International application number: PCT/ES2013/070057
(87) International publication number: WO 2013/113971

(57) **Abstract**

Compression cylinder (1) for presses, comprising a tubular main body (10) and a tubular piston (11) with freedom of displacement with respect to the main body (10) in a substantially vertical direction of displacement (Y). The main body (10) comprises a base (10a) and a prolongation (10b), and the piston (11) comprises a cavity (11b) and an outer diameter greater than the outer diameter of the prolongation (10b) of the main body (10). The prolongation (10b) of the main body (10) is housed at least partially in the cavity (11 b) of the piston (11).

## Description

### TECHNICAL FIELD

The present invention relates to compression cylinders adapted for being used in presses or similar machines.

### PRIOR ART

Compression cylinders are widely used in industry where they can perform different functions. One of these functions is to dampen the displacement of a die or an equivalent element in presses, for example.

There are different alternatives of compression cylinders on the market designed to perform this task. Such cylinders comprise a main body and a piston which, when it supports an external force, it is displaced in a substantially vertical direction with respect to the main body, being housed at least partially in said main body. When the piston no longer supports the force, it returns to its original position by being displaced in the opposite substantially vertical direction immediately or even in a controlled manner. The inside of the main body is closed in a leak-tight manner with respect to the outside such that the entry of dirt therein, which may shorten the service life of the cylinder for example, is made difficult. However, the outer surface of the piston is in contact with the outside and dirt can adhere to said external surface, such that when the piston is introduced in the main body due to the action of an external force, this dirt can also be introduced in the main body, damaging the cylinder.

This problem is known and there are solutions to prevent or to at least minimize it, in order to increase the service life of the cylinder. Document WO 2010102994 A1 for example shows a cylinder comprising a cap to protect the piston from dirt, the cap being attached to the piston and comprising a width greater than the main body, such that dirt adheres to the external surface of the cap and not to the external surface of the piston. The cap does not enter the main body, therefore the entry of this dirt in the main body is prevented with this solution.

### DESCRIPTION OF THE INVENTION

The object of the invention is to provide a compression cylinder as described in the claims.

The compression cylinder of the invention comprises a main tubular body and a tubular piston with freedom of displacement with respect to the main body in a substantially vertical direction of displacement. The main body comprises a base and a prolongation, and the piston comprises a cavity and an outer diameter greater than the outer diameter of the prolongation of the main body. The prolongation of the main body is housed at least partially in the cavity of the piston.

Therefore, dirt which adheres to the piston is not introduced in the main body, and the risk of dirt entering said main body is considerably reduced, the service life of the cylinder being increased. Furthermore, the advantage of increasing the service life of the cylinder is obtained without the need of adding additional elements directed to provide this advantage, which would increase the cost of the cylinder.

These and other advantages and features of the invention will become evident in view of the drawings and the detailed description of the invention.

### DESCRIPTION OF THE DRAWINGS

Figure 1 is a cross-section view of a first embodiment of the compression cylinder of the invention, in a resting position.
Figure 2 is a cross-section view of the cylinder of Figure 1, in a damping position.
Figure 3 is a cross-section view of a second embodiment of the compression cylinder of the invention, in a resting position.
Figure 4 is a cross-section view of a third embodiment of the cylinder of the invention, in a resting position.

### DETAILED DESCRIPTION OF THE INVENTION

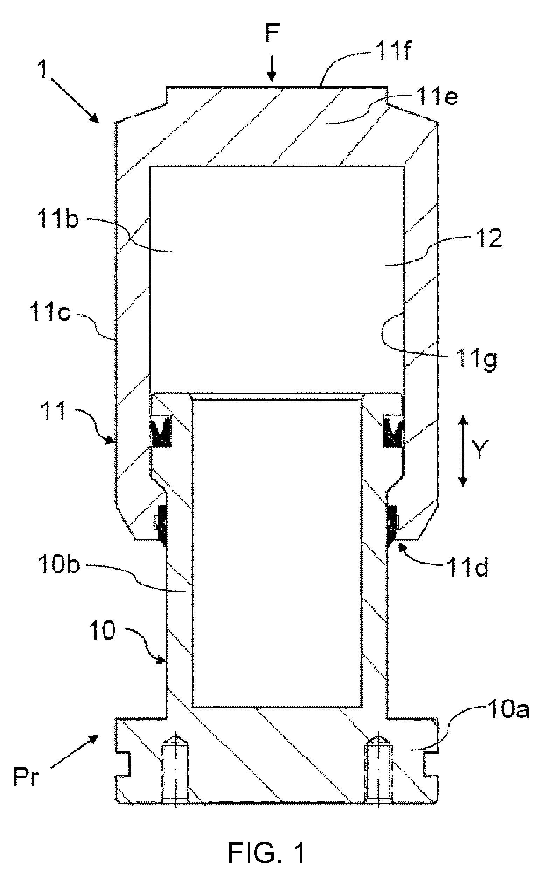

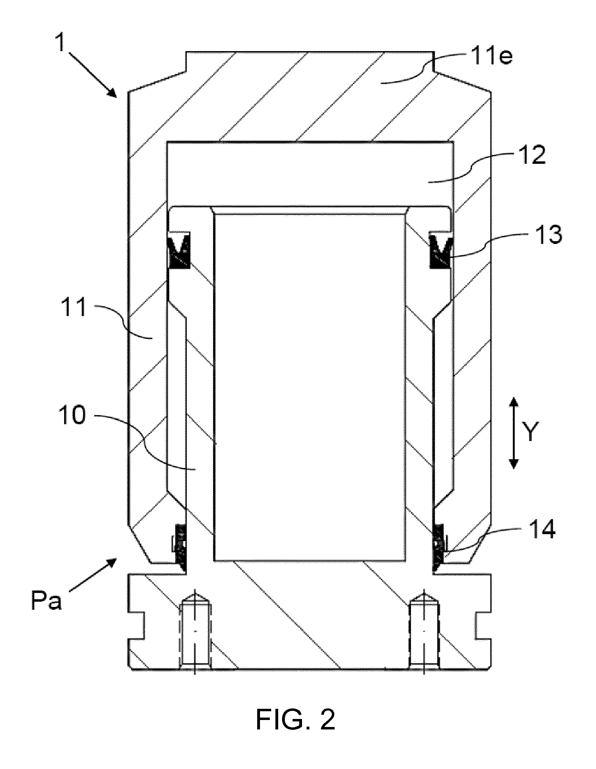

Figures 1 and 2 show, by way of example, a first embodiment of the cylinder 1 of the invention in a resting position Pr and in a damping position Pa respectively.

In any of its embodiments, the compression cylinder 1 of the invention is adapted for being used in presses 100 or similar machines. The element shown as press 100 in the drawings is depicted by way of illustration, it being evident that it is only a small part of a press.

The cylinder 1 of the invention comprises a tubular main body 10 with a base 10a and a prolongation 10b or rod, a tubular piston 11 with freedom of displacement with respect to the main body 10 in a substantially vertical direction of displacement Y, and a chamber 12 inside the piston 11, delimited between the main body 10 and the piston 11, where a fluid preferably in the form of a gas, in particular nitrogen, is provided. As the piston 11 moves, the volume of the chamber 12 increases or decreases depending on the direction of displacement, the pressure of the fluid present in the chamber 12 increasing or decreasing.

In a press 100 for example, the cylinder 1 being in a resting position Pr or Pr', when a die (not depicted in the drawings) is lowered to stamp a metal sheet, for example, at a specific point, the die acts directly or indirectly on a contact surface 11f of the piston 11 with a specific force F causing the displacement of the piston 11 in the direction of displacement Y in the direction of reducing the volume of the chamber 12, towards a damping position Pa of the cylinder 1, the pressure of the fluid present in the chamber 12 being increased, such that the cylinder 1 dampens the displacement of the die. When the die returns to its initial position, the pressure of the gas present in the chamber 12 pushes the piston 11 in the direction of displacement Y in the direction of increasing the volume of the chamber 12, and the cylinder returns to the resting position Pr or Pr', the volume of the chamber 12 being increased and the pressure of the fluid present in the chamber 12 being decreased. The damping position Pa of cylinder 1 must be understood as any position of the cylinder 1 which is not its resting position Pr or Pr', i.e., any position which the cylinder has been forced to adopt by means of a force F exerted on the piston 11, in this case, the position in which it dampens the die displacement.

In both embodiments of the cylinder 1 of the invention, the outer diameter of the piston 11 is greater than the outer diameter of the main body 10, the piston 11 comprising a cavity 11 b for housing at least partially the main body 10 (the prolongation 10b of the main body 10). The cavity 11 b is concentric to the rest of the piston 11 and the chamber 12 is defined therein between the end of the inside of the piston 11 opposite the end closest to the base 10a of the main body 10, and the end of the prolongation 10b of the main body 10 farthest from the base 10a. Since the diameter of the piston 11 is greater than the diameter of the main body 10, dirt adhered to the outer surface 11c of the piston 11 is prevented from affecting the main body 10, which may involve a reduction in the service life of the cylinder 1. Furthermore, this advantage is obtained without the need of adding additional elements directed to provide this advantage which, in addition to increasing the cost of the cylinder, may complicate its manufacture due to the needs of fixing or attaching the additional element to the main body or to the piston.

In the first embodiment of the cylinder 1 of the invention shown by way of example in Figures 1 and 2, the piston 11 comprises an opening 11d at a first end through which the prolongation 10b of the main body 10 is housed at least partially in the cavity 11 b of the piston 11, and a closure element 11 e at a second end opposite the first end, delimitating the cavity 11 b of the piston 11 at said second end. Therefore, the chamber 12 is delimitated between the closure element 11e of the piston 11, the end of the prolongation 10b opposite the base 10a of the main body 10, and an inner surface 11 g of the piston 11. The closure element 11e can be an element that is additional to the piston 11, fixed to said piston 11, or it can be part of the piston 11 itself as shown, for example, in the embodiment of Figure 1, and it preferably comprises at least part of the contact surface 11f.

To assure a leak-tight closure of the chamber 12, the cylinder 1 comprises leak-tight means 13 between the inner surface 11 g of the piston 11 and the end opposite the base 10a of the prolongation 10b of the main body 10. The cylinder 1 further comprises other leak-tight means 14 in the opening 11 d of the piston 11 to provide a leak-tight closure at the first end of the piston 11 between said piston 11 and the main body 10. The leak-tight means 13 and 14 preferably comprise a gasket.

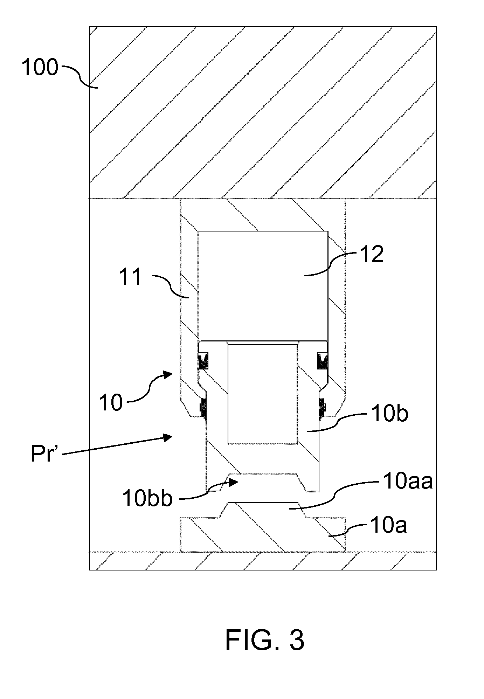

Figure 3 shows, by way of example, a second embodiment of the cylinder 1 of the invention, with the cylinder 1 in a resting position Pr'. The cylinder 1 of the second embodiment differs from the cylinder 1 of the first embodiment in that the base 10a of the main body 10 is separated from the prolongation 10b of said main body 10, the surfaces of the base 10a and the prolongation 10b that are faced one against the other comprising a complementary shape in order to cooperate one with each other, with the aim of helping in a correct alignment of the cylinder 1 in a simple manner and without the need of adding additional elements to carry out said function. Preferably, the base 10a comprises a substantially conical and centered protrusion 10aa faced to the prolongation 10b, and the prolongation 10b comprises a substantially conical and centered recess 10bb adapted for receiving the substantially conical and centered protrusion 10aa of the base 10a, but the protrusion could be comprised by the prolongation 10b and the recess by the base 10a. Any other cooperating shapes of the base 10a and the prolongation 10b could also be possible. In this way, the cylinder 1 can actuate as a guiding column for the press 100. For that purpose the base 10a and the piston 11 are fixed to the press 100, each one to a respective part of the press 100.

Generally, the surfaces of the piston 11 and of the prolongation 10b that slides one against the other are impregnated with a layer of a lubricating material such as oil, which is evaporated or eliminated with the operations of the cylinder 1. This implies that the cylinder 1 suffers leakages of the gas present inside the chamber 12, which affects the service life of the cylinder 1.

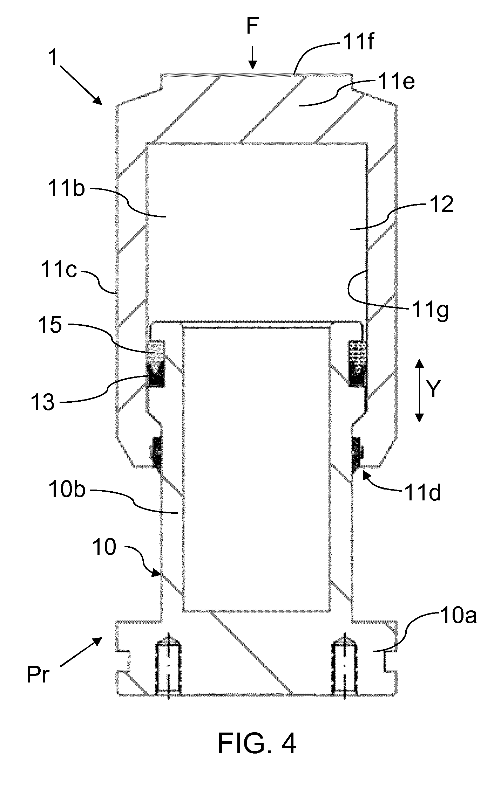

In order to improve or increase the service life of the cylinder 1, in another configuration the cylinder 1 comprises a chamber 15 between the piston 11 and the prolongation 10b of the main body 10, with a lubricating fluid inside it with a lubricating fluid in it, preferably oil. The chamber 15 comprises an annular shape and surrounds the prolongation 10b of the main body 10, and, preferably, the leak-tight means 13 are disposed inside it, the leak-tight means 13 being covered by the lubricating fluid. The chamber 15 is comprised in the prolongation 10b of the main body 10, as it is shown in Figure 4 where the lubricated fluid is represented in a granulated form, but it could be also comprised in the piston 11 (in particular, in the inner surface 11 g of the piston 11). In the first case the chamber 15 is open in one of its sides, in particular in the side facing the piston 11, so that the surfaces of the prolongation 10b and of the piston 11 that slides one against the other are in contact with the lubricated fluid present in the chamber 15 and are lubricated. In the second case the chamber 15 is open in one of its sides, in particular in the side facing the prolongation 10b, so that the surfaces of the prolongation 10b and of the piston 11 that slides one against the other are in contact with the lubricated fluid present in the chamber 15 and are constantly lubricated. In the latter case the chamber 15 would be disposed in the area of the leak-tight means 14, and said leak-tight means 14 could be inside said chamber 15 covered by the lubricating fluid.

Therefore, the area between the prolongation 10b and the piston 11 where the leakages can be produced contains the lubricating fluid, and as the density of it is greater than the density of the gas present inside the chamber 12, the sealing between the prolongation 10b and the piston 11 is improved, or at least maintained with a high degree of safety, the risk of suffering said leakages being decreased. As an example, conventional oil comprises a viscosity of 0,98 while a gas such as nitrogen comprises a viscosity of 1,8*10⁻⁶, which indicates a greater difficulty for the oil to scape. Consequently, this configuration also contributes to improve or increase the service life of the cylinder 1, in addition to avoiding, or lowering the risk, the dirt affecting the main body 10.

## Claims

1. A compression cylinder for presses, comprising a tubular main body (10) and a tubular piston (11) with freedom of displacement with respect to the main body (10) in a substantially vertical direction of displacement (Y), **characterized in that** the main body (10) comprises a base (10a) and a prolongation (10b), the piston (11) comprising a cavity (11b) and an outer diameter greater than the outer diameter of the prolongation (10b) of the main body (10), the prolongation (10b) being housed at least partially in the cavity (11b) of the piston (11).

2. The cylinder according to claim 1, wherein the piston (11) comprises an opening (11 d) at a first end through which the main body (10) is housed at least partially in the cavity (11 b) of the piston (11), and a closure element (11e) at a second end opposite the first end, which delimits the cavity (11b) of the piston (11) at said end.

3. The cylinder according to claim 2, wherein the closure element (11e) is part of the piston (11).

4. The cylinder according to claim 2 or 3, wherein between the closure element (11e), the end of the prolongation (10b) of the main body (10) closest to the base (10a) of the main body (10) and an inner surface (11 g) of the piston (11), a chamber (12) is arranged in the cavity (11 b) of the piston (11), where a fluid is provided.

5. The cylinder according to any of claims 2 to 4, comprising leak-tight means (13) between an inner surface (11 g) of the piston (11) and the end opposite the base (10a) of the prolongation (10b) of the main body (10), and other leak-tight means (14) between the opening (11 d) of the piston (11) and the main body (10).

6. The cylinder according to claim 5, wherein the leak-tight means (13, 14) comprise at least one gasket.

7. The cylinder according to any of the preceding claims, wherein the base (10a) of the main body (10) is separated from the prolongation (10b) of said main body (10), the surfaces of the base (10a) and the prolongation (10b) that are faced one against the other comprising a complementary shape in order to cooperate one with each other.

8. The cylinder according to claim 7, wherein the base (10a) comprises a substantially conical and centered protrusion (10aa) faced to the prolongation (10b), and the prolongation (10b) comprises a substantially conical and centered recess (10bb) adapted for receiving said protrusion (10aa).

9. The cylinder according to any of the preceding claims, comprising a chamber (15) between the piston (11) and the prolongation (10b) of the main body (10), with a lubricating fluid inside.

10. The cylinder according to claim 9, wherein the chamber (15) comprises an annular shape and surrounds the prolongation (10b) of the main body (10).

11. The cylinder according to claims 9 or 10, comprising leak-tight means (13) between an inner surface (11g) of the piston (11) and the main body (10), disposed inside the chamber (15).

12. The cylinder according to any of claims 9 to 11, wherein the chamber (15) is comprised in the prolongation (10b) of the main body (10).

13. The cylinder according to any of claims 9 to 11, wherein the chamber (15) is comprised in the piston (11).

14. The cylinder according to any of claims 9 to 12, wherein the lubricating fluid is oil.
